# EUROPEAN PATENT APPLICATION

(11) **EP 2 246 399 A1**
(43) Date of publication of application: **03.11.2010**
(21) Application number: 09159124.8
(22) Date of filing: 29.04.2009
(51) Int. Cl.: C09D 133/06

(54) **Aqueous binder system comprising epoxy-functional and carboxyl- functional components, a process for their manufacture, and a method of use thereof**

(71) Applicant: Cytec Surface Specialties Austria GmbH, 8402 Werndorf (AT)
(72) Inventor: Billiani, Johann, Dr., 8042, Graz (AT); Friedl, Maximilian, 8101, Gratkorn (AT); Rossmann, Karl, 8151, Berndorf (AT); Bambach, Erik, 8402, Werndorf (AT)
(74) Representative: Deckers, Hellmuth Alexander

(57) **Abstract**

The invention relates to an aqueous binder system which comprises an acid-functional polymer **A** and an epoxide-functional polymer **B**, and wherein polymer **A** comprises moieties having at least one acid group, and polymer **B** comprises moieties having at least one epoxy group, and wherein the quantities of polymers **A** and **B** are chosen to provide a ratio of the amount of substance *n*(Ac) of acid groups in **A** to the amount of substance *n*(EP) of epoxide groups in **B** of from 1.5 mol : 1 mol to 0.7 mol : 1 mol, a process for its manufacture, and a method of use thereof.

## Description

The present invention relates to an aqueous binder system comprising epoxy-functional and carboxyl-functional components. It also relates to a process of manufacture of the said aqueous binder system comprising epoxy-functional and carboxyl-functional components, and a method of use thereof in the preparation of coating compositions.

Aqueous binder systems for coating compositions are attractive for their low emission of volatile organic compounds, and also for the ease of cleaning of coating equipment in comparison to solvent borne binder systems. In the field of acrylic polymer based coating compositions, systems have been known that can be crosslinked with blocked or non-blocked polyfunctional isocyanates, amino-resin based crosslinkers, or also the so-called self-crosslinking systems where no separate crosslinker has to be added before the application of the coating composition to a substrate.

In the US patent 5,075,370, a coating composition is described where non-blocked isocyanates are combined with aqueously dispersed polyacrylate polyol. In the European patent application EP 1 908 807 A1, a combination of an emulsion of a hydroxy-functional acrylic resin and an aqueous dispersion of a hydrophobic melamine resin is disclosed. A coating composition comprising a hydroxyl group-containing acrylic resin and a melamine resin has been known from EP 0 846 739 A2. In the European patent application EP 0 819 710 A2, a combination of an emulsion of a hydroxy-functional acrylic resin and polyfunctional crosslinkers such as aminoplast resins, phenolic resins, and optionally blocked polyfunctional isocyanates is described.

The object of the present invention was to provide a binder resin system which does not need an added crosslinker, which is thermally crosslinked, without releasing volatile compounds which is the case when using aminoplast or phenolic resins, or blocked isocyanates, as crosslinkers, and which has fast cure and high gloss and gloss retention even when subjected to humid environment at elevated temperature such as 40 °C.

It has been found in the experiments that have led to the present application that a binder system comprising an acid-functional polymer and an epoxy functional polymer, wherein preferably, both polymers belong to the same chemical family, exhibit these desired properties.

Polymers P1 and P2 are regarded as belonging to the same family, for the purpose of this invention, if at least 30 % of the mass of the monomers used to prepare P1 and at least 30 % of the monomers used to prepare P2 have the same functional groups which take part in the polymerisation reaction. By way of an example, the functional groups used to prepare a polyester are acid groups and hydroxyl groups, so P1 and P2 are both polyesters for the purpose of this invention if at least 30 % of the monomers used to prepare P1 and at least 30 % of the monomers used to make P2 are molecules have at least two acid groups, or at least two hydroxyl groups, or at least one acid group and at least one hydroxyl group. Similarly, P1 and P2 are both poly(meth)acrylates for the purpose of this invention if at least 30 % of the monomers used to prepare P1 and at least 30 % of the monomers used to make P2 are molecules having at least one (meth)acryl group. In this case, the functional group taking part in the polymerisation reaction is the vinyl group of the (meth)acryl group.

The term "(meth)acryl" refers to acryl or methacryl, meaning either acryl or methacryl individually, or both acryl and methacryl in combination.

The aqueous binder system of this invention comprises an acid-functional polymer **A** and an epoxide-functional polymer **B,** wherein polymer **A** and polymer **B** preferably belong to the same family, and wherein polymer **A** comprises moieties having at least one acid group, and polymer **B** comprises moieties having at least one epoxy group. The quantities of polymers **A** and **B** are preferably chosen to provide a ratio of the amount of substance n(Ac) of acid groups in **A** to the amount of substance n(EP) of epoxy groups in **B** of from 1.5 mol : 1 mol to 0.7 mol: 1 mol.

Preferred polymers **A** are acrylic copolymers, polyesters, and polyurethanes. It is further preferred that polymer **A** has a sufficient amount of acid groups that enable polymer **A** to be emulsified in water after at least partial neutralisation of the acid groups. A sufficient amount to such acid groups preferably corresponds to an acid number of polymer **A** of from 15 mg/g to 250 mg/g. Preferred polymers **B** are acrylic copolymers.

In the case of acrylic copolymers **A,** these are preferably derived from acid-functional olefinically unsaturated monomers **A1,** and additionally, moieties derived from olefinically unsaturated esters **A2** which may be olefinically unsaturated esters **A21** of acid-functional olefinically unsaturated monomers **A211** and linear, branched or cyclic aliphatic alcohols **A212** having from 1 to 20 carbon atoms and at least one hydroxyl group, or olefinically unsaturated esters **A22** of saturated linear, branched or cyclic aliphatic acids **A221** having from 1 to 20 carbon atoms and olefinically unsaturated alcohols **A222** having from 3 to 20 carbon atoms and one hydroxyl group and optionally, further additionally, other olefinically unsaturated monomers **A3** selected from the group consisting of vinyl aromatic compounds **A31,** olefinically unsaturated ketones **A32,** olefinically unsaturated ethers **A33,** and olefinically unsaturated acid nitriles **A34.**

In the case of polyesters **A,** these are polycondensates of acid-functional and hydroxy-functional monomers, preferably of diacids **A82** and dihydroxy compounds **A92,** where up to 10 % of the amounts of substance of these difunctional compounds can be replaced by trifunctional or higher functional acids **A83** and by trifunctional or higher functional hydroxy compounds **A93,** respectively. Formation of a too high degree of branching or crosslinking can be avoided if monofunctional acids **A81** and/or monohydroxy compounds **A91** are added. It is also possible to replace at least a part of the diacids **A82** and dihydroxy compounds **A92** by hydroxyacids **A7** which have at least one hydroxyl group and at least one acid group. Hydroxyacids **A73** having more than one functional group each of either hydroxyl groups or acid groups, or of both, also lead to formation of branched, and also, crosslinked polymers.

In a preferred embodiment, compatibility between an acrylic copolymer **B** and a polyester **A** can be enhanced by grafting at least one of the monomers **A1**, **A2,** and **A3** onto the polyester polymer, wherein in this case, it is preferred to have moieties derived from unsaturated diacids or dihydroxy compounds present in the polymer, or monomers that have a tertiary carbon atom bearing a hydrogen atom which is easily cleaved by a radical.

In the case of polyurethanes **A,** these are polyaddition products of difunctional isocyanates **A61**, of difunctional hydroxy compounds **A62,** which comprise at least one oligomeric or polymeric dihydroxy compound **A621** selected from the group consisting of polyetherdiols, polyesterdiols, polyolefindiols, polyamide diols, polcarbonatediols, and polylactonediols, and optionally, also monomeric aliphatic hydrocarbon diols **A622** having a molar mass of not more than 400 g/mol, of amino- or hydroxycarboxylic acids **A63,** and optionally, of chain extenders **A64** having at least two groups that are reactive towards isocyanates, and that are not compounds according to **A622,** and also optionally, chain stoppers **A65** having one group that is reactive with isocyanates selected from the group consisting of primary and secondary amino groups, and mercaptan groups, and optionally, also one or more hydroxyl groups.

In a preferred embodiment, compatibility between an acrylic copolymer **B** and a polyurethane **A** can be enhanced by grafting at least one of the monomers **A1**, **A2,** and **A3** onto the polyurethane polymer, wherein in this case, it is preferred to have moieties derived from unsaturated diacids or dihydroxy compounds present in the polymer, or monomers that have a tertiary carbon atom bearing a hydrogen atom which is easily cleaved by a radical.

The preferred acrylic copolymers **B** comprise moieties derived from epoxy-functional olefinically unsaturated monomers **B1**, and additionally, moieties derived from olefinically unsaturated esters **B21** of acid-functional olefinically unsaturated monomers **B211** and linear, branched or cyclic aliphatic alcohols **B212** having from 1 to 20 carbon atoms and at least one hydroxyl group, and optionally, further additionally, other olefinically unsaturated monomers **B3** selected from the group consisting of vinyl aromatic compounds **B31,** olefinically unsaturated ketones **B32**, olefinically unsaturated esters **B22** of saturated linear, branched or cyclic aliphatic acids **B221** having from 1 to 20 carbon atoms and olefinically unsaturated alcohols **B222** having from 3 to 20 carbon atoms and one hydroxyl group, olefinically unsaturated ethers **B33**, and olefinically unsaturated acid nitriles **B34**.

In a preferred embodiment, the aqueous binder system has a glass transition temperature Tg of from 220 K to 360 K, preferably from 260 K to 320 K.

In a preferred embodiment, the mass fraction of monomers **A1**, based on the mass of polymer **A,** is from 2 % to 15 %.

In a preferred embodiment, the mass fraction of monomers **A2,** based on the mass of polymer **A,** is from 15 % to 65 %.

In a preferred embodiment, also moieties derived from monomers **A3** are present in the polymer **A,** and preferably, the mass fraction of monomers **A3,** based on the mass of polymer **A,** is from 10 % to 70 %.

In a preferred embodiment, the mass fraction of monomers **B1,** based on the mass of polymer **B,** is from 10 % to 30 %.

In a preferred embodiment, the mass fraction of monomers **B2,** based on the mass of polymer **B,** is from 30 % to 60 %.

In a preferred embodiment, also moieties derived from monomers **B3** are present in the polymer **B,** and preferably, the mass fraction of monomers **B3**, based on the mass of polymer **B,** is from 5 % to 45 %.

In a preferred embodiment, the polymer **A** additionally comprises moieties derived from hydroxy-functional olefinically unsaturated monomers **A4,** preferably with a mass fraction of monomers **A4,** based on the mass of polymer **A,** of from 10 % to 40 %.

In a preferred embodiment, the acid number of the binder system, based on the sum of masses of polymers **A** and **B,** is from 10 mg/g to 100 mg/g, particularly preferred from 20 mg/g to 80 mg/g.

In a preferred embodiment, the specific content of epoxide groups in the binder system, measured as the amount of substance ***n***(EP) of epoxide groups divided by the sum of masses of polymers **A** and **B,** is from 0.2 mol/kg to 2 mol/kg, particularly preferably, from 0.3 mol/kg to 1.8 mol/kg.

In a preferred embodiment, the hydroxyl number of the binder system comprising polymers **A** and **B** is from 0 mg/g to 100 mg/g.

The invention also relates to a process to make the said aqueous binder system by mixing aqueous emulsions of polymers **A** and **B,** wherein an aqueous emulsion of polymer **A** is provided, and an aqueous emulsion of polymer **B** is also made by emulsion polymerisation of a mixture comprising monomers **B1**, **B2**, and optionally, **B3**, preferably in the presence of the preformed emulsion of polymer A. Preferably, in the latter case, polymer **B** is made at a reaction temperature lower than in the case for polymer **A,** and therefore, redox initiators are preferred to make polymer **B.**

In the case of **A** being an acrylic copolymer, it is preferably made by emulsion polymerisation of a mixture comprising monomers **A1**, **A2,** and optionally, **A3,** and further optionally, **A4,** which polymerisation reaction is initiated by commonly used radical initiators such as peroxides, hydroperoxides, peroxy acids, peroxy ethers, and aliphatic azo compounds such as azobis-isobutyronitrile, or by a commonly used redox initiator system such as sodium hydrogen sulphite / potassium peroxodisulphate, or hydrogen peroxide / ascorbic acid.

Polymerisation of olefinically unsaturated monomers leading to acrylic copolymer **A** is preferably conducted at a temperature of from 70 °C to 95 °C, at ambient pressure. In this preferred process, water is first charged, a radical initiator or a redox initiator pair comprising a reducing agent and an oxidation agent, dissolved in water in each case, are added, an emulsifier of anionic or non-ionic nature, particularly preferably, a combination of both types of emulsifiers, are fed into the reaction vessel, preferably, together with further water, and a mixture of monomers **A1** and **A2,** and optionally, **A3,** and further optionally, **A4.**

In a preferred embodiment, an aqueous emulsion of polymer **A** is made in the first step by emulsion polymerisation of a mixture comprising monomers **A1**, **A2,** and optionally, **A3,** and further optionally, **A4,** and the polymer **B** is made in a second step by emulsion polymerisation of a mixture comprising monomers **B1**, **B2**, and **B3** in the presence of the emulsion of polymer **A** formed in the first step.

In the case of polymer **A** being a polyester, diacids **A82** and dihydroxy compounds **A92,** optionally in mixture with tri- or higher functional acid compounds **A83,** and **A93,** and further optionally, in mixture with monofunctional compounds **A81** and **A91**, and further optionally, at least a part of the diacids **A82** and dihydroxy compounds **A92** may be replaced by hydroxyacids **A7** having at least one hydroxyl group and at least one acid group, preferably, exactly one of each of these groups. The polyester is preferably synthesised in bulk, by mixing and heating the monomers, and removing the water formed by condensation. In a customary variant, the named educts or starting products or monomers used for the synthesis of the polyester may be replaced, partly, or completely, by derivatives of the said educts which lead to formation of more volatile condensates than water, such as alcohols, low molar mass esters, or other easily separable compounds such as salts or ketones formed from esters of acids with unsaturated alcohols such as isopropenyl esters. The polyester is either self-emulsifying in water if a sufficient amount of acid groups is present in the polymer, preferably corresponding to an acid number of from 20 mg/g to 250 mg/g, or it can be emulsified by addition of commonly used emulsifiers.

As in the case of polymer **A** being an acrylic copolymer, the emulsion of polyester in water acts as stabiliser and emulsifier for the monomers used in the emulsion polymerisation to form polymer **B.**

In the case of polymer **A** being a polyurethane, it is preferred, as usual to synthesise an isocyanate-functional prepolymer in the first step, by reaction of difunctional isocyanates **A61**, of difunctional hydroxy compounds **A62,** which comprise at least one oligomeric or polymeric dihydroxy compound **A621** selected from the group consisting of polyetherdiols, polyesterdiols, polyolefindiols, polyamide diols, polcarbonatediols, and polylactonediols, and optionally, also monomeric aliphatic hydrocarbon diols **A622** having a molar mass of not more than 400 g/mol, of amino- or hydroxycarboxylic acids **A63,** in the first step, which reaction is commonly conducted in solution, and leads, according to the chosen stoichiometry, to an isocyanate-functional prepolymer which is then dispersed in water, and reacted with at least one of chain extenders **A64** having at least two groups that are reactive towards isocyanates, and that are not compounds according to **A622,** and chain stoppers **A65** having one group that is reactive with isocyanates selected from the group consisting of primary and secondary amino groups, and mercaptan groups, and optionally, also one or more hydroxyl groups. The acid component **A63** is preferably used in an amount to give a polyurethane polymer having an acid number of at least 20 mg/g.

The invention also relates to a method of use of the said aqueous binder system comprising admixing at least one of a defoamer additive, a flow additive, a pigment, a colourant, and an esterification catalyst, applying the mixture to a substrate by spraying, dipping, blade coating, brushing, roller coating, or curtain coating, and heating the coated substrate to a temperature sufficient to initiate the reaction between the epoxide groups in polymer **B** and the acid groups in polymer **A** to form a hydroxy ester, preferably at least 120 °C, and more preferably at least 160 °C.

In a preferred embodiment, the substrate is a metal, a metal coated with at least one layer of a coating, a metal coated with a layer of its oxide, ceramic, glass, or a thermoplastic polymer.

The binder system is particularly suited to wire insulation, coating of base metals such as aluminium and zinc, for coating of glass which can be clear or preferably also coloured, and for coatings on ceramic substrates. The absence of volatile by-products which are evolved during the crosslinking process is particularly advantageous for such applications where no special equipment is available to burn or absorb or incinerate the gaseous products split off when the customary blocked isocyanates or aminoplast or phenolic resin crosslinkers are used.

Other advantages of the binder systems of the present invention are the lower thermal yellowing, resistance to sterilisation (better humidity and water resistance at elevated temperatures), and resistance also against acid rain.

Compared to mixtures prepared by mixing epoxy functional and acid-functional resins that have been separately prepared, the binder system of the present invention shows better gloss and less haze.

The acrylic copolymers, polyesters, and polyurethanes are made according to the usual methods which are known to a person skilled in the art.

The following monomers are preferred when making the copolymers **A** and **B** according to the invention:

As acid-functional olefinically unsaturated monomers **A1**, preference is given to those having at least one carboxylic acid group, and from 3 to 10 carbon atoms, such as acrylic acid, methacrylic acid, ethacrylic acid, crotonic acid, isocrotonic acid, and vinylacetic acid, as well as to the half esters of olefinically unsaturated dicarboxylic acids mentioned infra, preferably the half esters of maleic and fumaric acids. Among the olefinically unsaturated monomers **A1** having more than one carboxylic acid group, maleic, fumaric, itaconic, mesaconic, and citraconic acid are preferred.

As olefinically unsaturated esters **A2** which do not have functional acid or hydroxyl groups, preferred are olefinically unsaturated esters **A21** of acid-functional olefinically unsaturated monomers **A211** which are selected from the same group as in **A1**, and may be the same or may be different from each other, in an acrylic copolymer **A,** and linear, branched or cyclic aliphatic alcohols **A212** having from 1 to 20 carbon atoms and at least one hydroxyl group, or olefinically unsaturated esters **A22** of saturated linear, branched or cyclic aliphatic monocarboxylic acids **A221** having from 1 to 20 carbon atoms and olefinically unsaturated alcohols **A222** having from 3 to 20 carbon atoms and one hydroxyl group. Among the linear, branched or cyclic aliphatic alcohols **A212** having from 1 to 20 carbon atoms and at least one hydroxyl group, preference is given to methanol, ethanol, n- and iso-propanol, n-, iso-, sec.- and tert.- butanol, n-pentanol and its commercially available isomers, n-hexanol, n-heptanol, n-octanol, 2-ethylhexanol, decyl alcohol, tridecyl alcohol, and stearyl alcohol. Among the saturated linear, branched or cyclic aliphatic acids **A221** having from 1 to 20 carbon atoms, preference is given to formic acid, acetic acid, propionic acid, n-butyric acid, n-pentanoic acid, neopentanoic acid (2,2-dimethylpropionic acid), n-hexanoic acid, n-octanoic acid, 2-ethylhexanoic acid, n-decanoic acid, 2,2-dimethyloctanoic acid, and mixtures of alpha-mono- or dialkylated alkanoic acids known under the trade name of ®Versatic acids. Among the olefinically unsaturated alcohols **A222** having from 3 to 20 carbon atoms and one hydroxyl group, preference is given to allyl alcohol, and methallyl and ethallyl alcohols. It is also possible to use diesters of dicarboxylic acids and monoalcohols, or diesters of dihydroxy compounds with monocarboxylic acids, wherein either the acid or the alcohol component bears an olefinic unsaturation.

Among the olefinically unsaturated monomers **A3,** for vinyl aromatic compounds **A31,** preference is given to . For the olefinically unsaturated ketones **A32,** preference is given to For the olefinically unsaturated ethers **A33,** preference is given to . For the olefinically unsaturated acid nitriles **A34,** preference is given to .

For the difunctional isocyanates **A61**, preference is given to aromatic diisocyanates having from 6 to 20 carbon atoms such as toluylene diisocyanate ("TDI"), bis-(4-isocyanatophenyl)-methane ("MDI"), aliphatic diisocyanates having from 4 to 20 carbon atoms such as 1-6-hexamethylenediisocyate ("HDI"), isophororonediisocyanate ("IPDI"), and hydrated MDI, and bis-(4-isocyanatocyclohexyl)methane ("HMDI").

For the oligomeric or polymeric dihydroxy compound **A621** selected from the group consisting of polyetherdiols, polyesterdiols, polyolefindiols, polyamide diols, polcarbonatediols, and polylactonediols, preference is given to polyoxyalkylenetherdiols having from 2 to 4 carbon atoms in the alkylene groups, such as polyoxyethylene diol, polyoxypropylene diol, and polyoxy-1,4-butylene diol and also mixed ethers such as polyoxy (ethylene-co-propylene) diol are preferred, further to polyesterdiols derived from aliphatic dicarboxylic acids having from 4 to 40 carbon atoms such as succinic acid, adipic acid, and the so-called dimeric fatty acids, and from aliphatic dihydroxy compounds or diols having from 2 to 40 carbon atoms, such as ethylene glycol, 1,2- and 1,3-propylene glycol, 1,4-butylene glycol, 1,6-hexane diol, and neopentylglycol, and also hydrated dimeric fatty acids having two hydroxyl groups. Further preference is given to polyolefindiols, particularly those derived from butadiene oligomers or polymers, which may also be hydrogenated, i. e. free of remaining olefinic unsaturation, and have terminal hydroxyl groups, and to polyamide diols that are preferably based on aliphatic dicarboxylic acids and aliphatic linear, branched or cyclic diamines which may be made by reacting the said diamines, the said dicarboxylic acids, and aliphatic hydroxycarboxylic acids, to polycarbonatediols derived from aliphatic dihydroxy compounds having from 2 to 50 carbon atoms made from these aid aliphatic dihydroxy compounds, where a single diol, or preferably, mixtures of two or more of such diols can be used, and a derivative of carbonic acid, such as phosgene, or dialkyl or diaryl carbonates, or dioxolanone or hexane diol bis-chlorocarbonate. Further preference is also given to polylactone diols which are made by reacting an alkylene glycol or an alkylene diamine with from 2 to 10 carbon atoms in each case with an excess of a lactone, preferably caprolactone.

For the aliphatic hydrocarbon diols **A622** having a molar mass of not more than 400 g/mol, preference is given to linear, branched, and cyclic aliphatic dihydroxy compounds such as ethylene glycol, diethylene glycol, 1,2- and 1,3-propylene glycol, dipropylene glycol, 1,4-butane diol, 1,6-hexane diol, neopentylglycol, and hydrogenated dimeric fatty acids having from 20 to 50 carbon atoms.

For the amino- or hydroxycarboxylic acids **A63,** preference is given to dimethylol acetic acid, dimethylol propionic acid, dimethylol butyric acid, tartaric acid, malic acid, and diaminopropionic acid. It is also possible to use aminosulphonic acids, such as 2-aminoethane sulphonic acid, 2,5-diaminovaleric acid (ornithine) and 2,4-diaminotoluene sulphonic acid-(5).

For the chain extenders **A64** having at least two groups that are reactive towards isocyanates, preference is given to water, diamines such as ethylene diamine, 1,3-diaminopropane, 1,4-diaminobutane, 1,6-hexamethylene diamine, and also to amines carrying substituents such as hydroxyl groups.

For the chain stoppers **A65** having one group that is reactive with isocyanates selected from the group consisting of primary and secondary amino groups, and mercaptan groups, and optionally, also one or more hydroxyl groups, preference is given to monofunctional compounds recative towards isocyantes, such as monoamines, particularly to mono-secondary amines, or monoalcohols, among which methylamine, ethylamine, n-propylamine, n-butylamine, n-octylamine, laurylamine, stearylamine, isononyloxypropylamine, dimethylamine, diethylamine, di-n- und di-iso- propylamine, din-butylamine, N-methylaminopropylamine, diethyl- and dimethyl-aminopropylamine, morpholine, piperidine, which may bear substituents such as lower (C₁- to C₄-) alkyl substituents, amidoamines made from diprimary amines and monocarboxylic acids, as well as monoketimines derived from diprimary amines, und primary/tertiary amines, such as N,N-dimethylamino propylamine.

Chain stoppers **A65** may also be selected from compounds having reactive hydrogen atoms with different reactivity. These can be compounds having amino groups of differing reactivity, such as amines having primary and secondary amino groups, hydroxycarboxylic acids, or hydroxyamines, the latter being especially preferred. Among these compounds, mention is made of 3-amino-1-methylaminopropane, 3-amino-1-ethylaminopropane, 3-amino-1-cyclohexylaminopropane, 3-amino-1-methylaminobutane; hydroxyacetic acid, lactic acid, malic acid, alkanolamines such as N-aminoethyl ethanolamine, ethanolamine, 3-aminopropanol, neopentanolamine and especially preferred diethanolamine.

For the diacids **A82,** preference is given to linear, branched or cyclic aliphatic and also aromatic acids, such as succinic acid, dimethylmalonic acid, glutaric acid, adipic acid, the isomeric cyclohexane dicarboxylic acids, tetrahydrophthalic acid, isophthalic and terephthalic acids, benzophenone dicarboxylic acid, and diphenylsulphone dicarboxylic acid.

For the dihydroxy compounds **A92,** preference is given to those mentioned under **A622** supra.

For the trifunctional or higher functional acids **A83**, preference is given to trimellithic acid, tricarballylic acid, and benzophenone tetracarboxylic acid.

For the trifunctional or higher functional hydroxy compounds **A93,** respectively, glycerol, erythritol, threitol, pentaerythritol, trimethylol ethane and -propane, ditrimethylol ethane and -propane, and dipentaerythritol are preferred.

For the monofunctional acids **A81**, preference is given to fatty acids such as stearic and palmitic acid, and also benzoic acid, and for the monohydroxy compounds **A91**, preference is given to diol monoethers such as butanediol monomethyl or monoethyl ether, or fatty alcohols such as stearyl and palmityl alcohol.

For the hydroxyacids **A7** which have at least one hydroxyl group and at least one acid group, preference is given to lactic acid, gamma-hydroxy butyric acid, delta-hydroxyl valeric acid, and epsilon-hydroxy caproic acid, and aromatic hydroxy acids such as parahydroxybenzoic acid, and 2,3- and 2,6-hydroxynaphthoic acids. Hydroxyacids having more than one functional group each of either hydroxyl groups or acid groups are preferably selected form citric acid, tartaric acid, 3,5-dihydroxy-2-naphthoic acid, and gentisic and resorcylic acids.

The optimum results have been obtained when the ratio of the sum of masses of monomers that are used to make polymer **A** to the sum of masses of monomers that are used to make polymer **B** was within 3:7 and 8:2, and the acid number of the mixture of polymers **A** and **B** was within the limits of from 10 mg/g to 100 mg/g, and the specific epoxide group content of the mixture of polymers **A** and B was within 0.1 mol/kg and 2 mol/kg, with the ratio of number of acid groups to number of epoxide groups the mixture of polymers **A** and B being from 2 : 1 to 1.1 : 1.

Preferably, the monomers are chosen in a way that the glass temperature of the mixture of polymers is between 220 K and 360 K, particularly preferably between 250 K and 330 K, and especially preferred between 260 K and 310 K. Selection of the glass temperature is preferably made without changing the acid number and specific amount of epoxide groups in the polymers **A** and **B,** by variation of the quantities of esters of shorter chain methacrylates, and longer chain acrylates, such as variation of the quantities of butylacrylate and methyl methacrylate.

### Examples

The invention is further illustrated by the following examples. In these examples, the acid number is defined according to DIN EN ISO 3682 (DIN 53 402) as the ratio of the mass ***m***_{KOH} of potassium hydroxide which is needed to neutralise the sample in question, and the mass ***m***_{B} of the sample (or mass of solids in the sample in the case of solutions or dispersions); the customary unit is "mg/g". The specific epoxide group content "SEC" is defined as the ratio of the amount of substance of epoxide groups ***n***(EP) and the mass ***m***_{B} of the substance (and is therefore the reciprocal of the so-called "epoxide value" or "epoxide equivalent weight"); the SI unit is "mol/kg".

Concentration, or strength, measured in "%", is always the mass fraction ***w***_{B} of a solute B in the solution (or dispersed component in a dispersion), calculated as ***w***_{B} = ***m***_{B} / ***m***, where ***m***_{B} is the mass of the solute, and ***m*** is the mass of the solution. All other values with the unit "%" are also mass fractions ***w***_{B} = ***m***_{B} / ***m*** calculated as the ratio of the mass ***m***_{B} of the substance B under consideration, and the mass ***m*** of the mixture.

### Examples 1 to 4 Preparation of copolymers having acid and epoxide functional groups

A reactor was charged with 5.13 kg of fully deionised water at room temperature. A surfactant solution of 111 g of the sodium salt of dodecylbenzene sulphonic acid and 141 g of an ethoxylated fatty alcohol (®Disponil A 3065, 65 % strength solution in water, Henkel KGaA) in 2.8 kg of fully deionised water was prepared. 30 % of this surfactant solution were then added to the reactor, and the contents of the reactor were heated to 80 °C. A solution of 24 g of ammonium peroxodisulphate in 214 g of fully deionised water was prepared and added to the reactor. Over a period of ninety minutes, a mixture of 40 % of the surfactant solution and the monomer mixture of the first step according to table 1 was added to the reactor under stirring, and care was exercised to keep the temperature in the range of 80 °C.

The reactor was held at that temperature under stirring for one hour. The reactor was then cooled to 50 °C, and a portion of 8 g of butylhydroperoxide (70 % strength in water) was added to the reactor. A mixture comprising the monomers of the second step, and the residual 30 % of the surfactant solution, and 12 g of a mixture of 55 % of the sodium salt of 2-hydroxy-2-sulphinatoacetic acid, 33 % of disodium sulphite, and 12 % of the sodium salt of 2-hydroxy-2-sulphonatoacetic acid (®Brüggolit FF6, Brüggemann) was prepared and then added over a period of ninety minures at 50 °C under stirring. The reactor was kept at the reaction temperature for one further hour, whereafter 3 g of a 70 % strength solution in water of butylhydroperoxide were added, followed by another 4 g of ®Brüggolit FF6 and 50 g of fully deionised water. After one further hour of post-reaction, the contents of the reactor were cooled to ambient temperature, and a whitish dispersion of 21 kg of resin (47 % strength in water) was obtained.

Table 1 lists the monomer composition, data determined on coating films made with these resins are listed in Table 2.

**Table 1 Monomer Composition**

| | | Example 1 | Example 2 | Example 3 | Example 4 |
|---|---|---|---|---|---|
| | Monomer or Component | mass in g | | | |
| Step 1 | butyl acrylate | 2000 | 3000 | 800 | 1500 |
| | methyl methacrylate | | 500 | 3000 | |
| | styrene | 1000 | | 3500 | 1000 |
| | ®Veova 10* | | 500 | | |
| | hydroxyethyl methacrylate | 2000 | 500 | | 500 |
| | acrylic acid | | 1000 | | |
| | methacrylic acid | 500 | | 200 | 1000 |
| Step 2 | tert.-butyl hydroperoxide, 70 % solution | 8 | 8 | 8 | 8 |
| | glycidyl methacrylate | 1500 | 1000 | 300 | 2600 |
| | butyl acrylate | 2000 | 3500 | 700 | 2500 |
| | methyl methacrylate | | | | 400 |
| | styrene | 1000 | | 1500 | |
| | ®Veova 10* | | | | 50 |
| | ®Brüggolit FF6‡ | 12 | 12 | 12 | 12 |
| | deionised water | 100 | 100 | 100 | 100 |
| Post-Reaction | tert.-butyl hydroperoxide, 70 % | 3 | 3 | 3 | 3 |

| | | | | | |
|---|---|---|---|---|---|
| *: ®Veova 10 is a registered Trade Mark of Hexion for vinyl esters of ®Versatic Acids (idem; mixture of alpha-branched C₁₀-aliphatic carboxylic acids) ‡ : ®Brüggolit FF6 is a registered Trade Mark for a mixture of the sodium salt of 2-hydroxy-2-sulphinatoacetic acid, of disodium sulphite, and of the sodium salt of 2-hydroxy-2-sulphonatoacetic acid | | | | | |

The following characteristic data have been measured on the core-shell copolymer dispersions made in Examples 1 to 4:

**Table 2**

| | Example 1 | Example 2 | Example 3 | Example 4 |
|---|---|---|---|---|
| Glass Transition Temperature in K | 283 | 249 | 342 | 282 |
| Acid Number in mg/g | 32.6 | 77.8 | 13.0 | 65.1 |
| Hydroxyl Number in mg/g | 86.2 | 21.5 | | 21.5 |
| Specific Epoxide Group Content in mol/kg | 1.06 | 0.70 | 0.21 | 1.83 |

### Example 5

The copolymer dispersion of Example 1 was applied to an aluminium sheet in a wet film thickness of 45 µm. The coating was pre-dried at ambient temperature for 2 minutes and then cured for 10 minutes at 120 °C. The following data were obtained:

| | |
|---|---|
| dry film thickness | 19 µm |
| Knoop hardness of the film | 34.3 MPa |
| MEK resistance | 200 |
| Erichsen Cupping | 8 mm |

These data were determined in accordance with the usual tests, Knoop hardness was determined according to ASTM D 1474 - 98 (ISO 6441), MEK resistance was counted as the number of double rubs before failure of a paint film (ASTM D 4752), and Erichsen Cupping was determined according to ASTM E 643-84.

In a further test, a standardised tinned iron sheet (tinplate) designated as "E1", and an aluminium panel (99.5 % purity, "EN AW 1050 A", Franz Krüppel GmbH & Co. KG, Krefeld) were each coated with a 50 µm wet film, predried for one minute, and then cured for 15 min in a forced air drying oven at 180 °C.

In the case of the tinned iron sheet, a dry film thickness of 14.4 µm was found, the Knoop hardness was 50.0 MPa (in old-fashioned units: 5.1 kp/mm²), the film adhesion as measured in the "cross-cut" test (DIN EN ISO 2409) with 1 mm spacing was rated "0", and the solvent resistance (MEK double rubs according to ASTM D4752) was 196 double rubs.

In the case of the aluminium panel, a dry film thickness of 10.5 µm was found, the Knoop hardness was 47.1 MPa (in old-fashioned units: 4.8 kp/mm²), the film adhesion as measured in the "cross-cut" test (DIN EN ISO 2409) with 1 mm spacing was rated "0", and the solvent resistance (MEK double rubs according to ASTM D4752) was 190 double rubs.

In a further test, gloss has been assessed according to DIN EN ISO 2813 by applying the copolymer dispersion of Example 1 as clear coat on a coil coated aluminium test panel, colour "squirrel grey", and measuring the gloss at an observation angle of 20°. The following values were found:

| | Stoving Time : 10 min | | | | |
|---|---|---|---|---|---|
| Curing temperature in °C | 100 | 120 | 140 | 160 | 180 |
| Film Thickness in µm | 22 | 21 | 20 | 20 | 18 |
| 20° Gloss | 82 | 82 | 77 | 81 | 79 |

| | Stoving Time : 5 min | | | |
|---|---|---|---|---|
| Curing temperature in °C | 180 | 200 | 220 | 240 |
| Film Thickness in µm | 27 | 22 | 20 | 18 |
| 20° Gloss | 81 | 80 | 79 | 78 |

The high gloss was retained after weathering for four weeks at 30 °C, and 50 % relative humidity.

## Claims

1. An aqueous binder system which comprises an acid-functional polymer **A** and an epoxide-functional polymer **B,** and wherein polymer **A** comprises moieties having at least one acid group, and polymer **B** comprises moieties having at least one epoxy group, and wherein the quantities of polymers **A** and **B** are chosen to provide a ratio of the amount of substance ***n***(Ac) of acid groups in **A** to the amount of substance ***n***(EP) of epoxide groups in **B** of from 1.5 mol: 1 mol to 0.7 mol: 1 mol.

2. The aqueous binder system of claim 1, wherein the quantities of polymers **A** and **B** are chosen in a way that the acid number of the binder system, based on the sum of the masses of polymers **A** and **B,** is from 10 mg/g to 100 mg/g.

3. The aqueous binder system of claim 1, wherein the quantities of polymers **A** and **B** are chosen in a way that the specific content of epoxide groups, calculated as the amount of substance ***n***(EP) of epoxide groups in the binder system divided by the sum ***m***(A) + ***m***(B) of the masses of polymers **A** and **B,** is from 0.2 mol/kg to 2 mol/kg.

4. The aqueous binder system of claim 1, wherein polymer **B** is an acrylic copolymer, and wherein polymer **B** comprises moieties derived from epoxy-functional olefinically unsaturated monomers **B1,** moieties derived from olefinically unsaturated esters **B21** of acid-functional olefinically unsaturated monomers **B211** and linear, branched or cyclic aliphatic alcohols **B212** having from 1 to 20 carbon atoms and at least one hydroxyl group, and optionally, other olefinically unsaturated monomers **B3** selected from the group consisting of vinyl aromatic compounds **B31,** olefinically unsaturated ketones **B32,** olefinically unsaturated esters **B22** of saturated linear, branched or cyclic aliphatic acids **B221** having from 1 to 20 carbon atoms and olefinically unsaturated alcohols **B222** having from 3 to 20 carbon atoms and one hydroxyl group, olefinically unsaturated ethers **B33,** and olefinically unsaturated acid nitriles **B34**.

5. The aqueous binder system of claim 1, wherein polymer **A** is an acrylic copolymer, and wherein polymer **A** comprises moieties derived from acid-functional olefinically unsaturated monomers **A1**, moieties derived from olefinically unsaturated esters **A21** of acid-functional olefinically unsaturated monomers **A211** and linear, branched or cyclic aliphatic alcohols **A212** having from 1 to 20 carbon atoms and at least one hydroxyl group, and optionally, other olefinically unsaturated monomers **A3** selected from the group consisting of vinyl aromatic compounds **A31**, olefinically unsaturated ketones **A32,** olefinically unsaturated esters **A22** of saturated linear, branched or cyclic aliphatic acids **A221** having from 1 to 20 carbon atoms and olefinically unsaturated alcohols **A222** having from 3 to 20 carbon atoms and one hydroxyl group, olefinically unsaturated ethers **A33,** and olefinically unsaturated acid nitriles **A34.**

6. The aqueous binder system of claim 1, wherein polymer **A** is a polyester that has an acid number of from 20 mg/g to 250 mg/g.

7. The aqueous binder system of claim 1, wherein polymer **A** is a polyurethane that has an acid number of from 20 mg/g to 250 mg/g.

8. A process to make the aqueous binder system of claim 1 by mixing aqueous emulsions of polymers **A** and **B,** wherein an aqueous emulsion of polymer **A** is made by emulsion polymerisation of a mixture comprising monomers **A1**, **A2,** and optionally, **A3,** and optionally, **A4,** and an aqueous emulsion of polymer **B** is made by emulsion polymerisation of a mixture comprising monomers **B1**, **B2**, and optionally, **B3.**

9. A process to make the aqueous binder system of claim 1 wherein in a first step, an aqueous emulsion of polymer **A** is made by emulsion polymerisation of a mixture comprising monomers **A1**, **A2,** and **A3,** and the polymer **B** is made in a second step by emulsion polymerisation of a mixture comprising monomers **B1**, **B2**, and **B3** in the presence of the emulsion of polymer **A** formed in the first step.

10. A method of use of the aqueous binder system of claim 1 comprising admixing at least one of a defoamer additive, a flow additive, a pigment, a colourant, and an esterification catalyst, applying the mixture to a substrate by spraying, dipping, blade coating, brushing, roller coating, or curtain coating, and heating the coated substrate to a temperature sufficient to initiate the reaction between the epoxide groups in polymer **B** and the acid groups in polymer **A** to form a hydroxy ester, preferably at least 120 °C, and more preferably at least 160 °C.

11. The method of use of claim 10 wherein the substrate is a metal, a metal coated with at least one layer of a coating, a metal coated with a layer of its oxide, ceramic, glass, or a thermoplastic polymer.
